# EUROPEAN PATENT APPLICATION

(11) **EP 4 778 669 A1**
(43) Date of publication of application: **22.07.2026**
(21) Application number: 24921380.2
(22) Date of filing: 19.08.2024
(51) Int. Cl.: B23K 31/02, B23K 37/00

(54) **BATTERY TOP CAP WELDING METHOD AND SYSTEM**

(30) Priority: 29.01.2024 CN 202410120089
(71) Applicant: Contemporary Amperex Technology Co., Limited, Ningde, Fujian 352100 (CN)
(72) Inventor: PENG, Nianshi, Ningde, Fujian 352100 (CN); LIAN, Shiyuan, Ningde, Fujian 352100 (CN); ZHANG, Zhongzheng, Ningde, Fujian 352100 (CN); CHEN, Jianyun, Ningde, Fujian 352100 (CN)
(74) Representative: Kraus & Lederer PartGmbB
(86) International application number: PCT/CN2024/113176
(87) International publication number: WO 2025/161354

(57) **Abstract**

Disclosed are a battery top cover welding method and system. A programmable logic controller is configured to: when battery cell press-fitting is to be performed on a current battery cell (5), and a size of the current battery cell (5) is different from a size of a previous battery cell, control a press-fitting device to make the current battery cell (5) move to a pre-press-fitting position; control a press-fitting mechanism (8) of the press-fitting device to move, so as to press-fit the current battery cell (5) at the pre-press-fitting position; when a pressure value exerted on the current battery cell (5) reaches a preset value to cause the press-fitting mechanism (8) to stop moving, acquire a movement displacement of the press-fitting mechanism (8); and calculate a change value between the movement displacement of the press-fitting mechanism (8) and a preset movement displacement; where the change value is used for displacement compensation in battery cell press-fitting and subsequent processes after battery cell press-fitting in top cover welding.

## Description

### CROSS-REFERENCE TO RELATED APPLICATIONS

The present disclosure is based on the Chinese patent application with application number 202410120089.9, filed on January 29, 2024, and entitled "BATTERY TOP COVER WELDING METHOD AND SYSTEM", and claims priority to the Chinese patent application, the entire content of which is incorporated herein by reference.

### TECHNICAL FIELD

The present disclosure relates to automatic model change technology in the battery production process, and in particular to a battery top cover welding method and system.

### BACKGROUND

Currently, in the related art, for the production process of batteries, when battery cells of different models are produced through top cover welding, after a fixture is replaced, manual re-clamping and positioning of a battery cell is required. This requires high personnel capabilities and is prone to errors caused by subjective judgment. In addition, multiple people collaborate to perform separate clamping and positioning for stations in battery cell press-fitting, gap detection, welding, rolling, post-welding detection, and the like, requiring a large amount of manpower for multi-station adjustment and model change, and taking a long time. Particularly, inconsistent quality is likely to occur due to multiple persons involved in the adjustment, thereby resulting in low production efficiency in top cover welding. Thus, it can be seen that the existing top cover welding has the technical problem of low production efficiency.

### SUMMARY

Embodiments of the present disclosure provide a battery top cover welding method and system, which can improve the production efficiency of battery cells in top cover welding.

The technical solution of the present disclosure is implemented as follows:

An embodiment of the present disclosure provides a battery top cover welding system, including: a programmable logic controller and a press-fitting device, where the programmable logic controller is configured to:
when battery cell press-fitting is to be performed on a current battery cell, and a size of the current battery cell is different from a size of a previous battery cell, control the press-fitting device to make the current battery cell move to a pre-press-fitting position;
control a press-fitting mechanism of the press-fitting device to move, so as to press-fit the current battery cell at the pre-press-fitting position;
when a pressure value exerted on the current battery cell reaches a preset value to cause the press-fitting mechanism to stop moving, acquire a movement displacement of the press-fitting mechanism; and
calculate a change value between the movement displacement of the press-fitting mechanism and a preset movement displacement; where the change value is used for displacement compensation in battery cell press-fitting and subsequent processes after battery cell press-fitting in top cover welding, and the processes after battery cell press-fitting include: gap detection, battery cell pre-welding, battery cell full welding, battery cell rolling, and post-rolling detection.

During battery cell press-fitting, the programmable logic controller is configured to perform pre-press-fitting on the current battery cell determined to have a different size from the previous battery cell, then perform press-fitting, when the pressure value exerted on the current battery cell reaches the preset value to cause the press-fitting mechanism to stop moving, acquire the movement displacement of the press-fitting mechanism, and calculate the change value with respect to the preset movement displacement, so as to perform displacement compensation for battery cell press-fitting and subsequent processes after battery cell press-fitting in top cover welding. This enables intelligent clamping and positioning for battery cells of different sizes when battery cells of different sizes are produced in top cover welding, avoiding time-consuming, labor-intensive, and error-prone manual operations, thereby improving the production efficiency of battery cells in top cover welding.

In an optional embodiment, the programmable logic controller is further configured to:
acquire a batch number of the current battery cell; and
when the batch number of the current battery cell is different from a batch number of the previous battery cell, determine that the size of the current battery cell is different from the size of the previous battery cell.

In this way, the programmable logic controller is configured to determine whether the current battery cell is a new model battery cell by comparing the batch number of the current battery cell with the batch number of the previous battery cell, and then adopts the battery top cover welding method proposed in the embodiments of the present disclosure for battery cell top cover welding of the new model battery cell, thereby improving the production efficiency of battery cells in top cover welding.

In an optional embodiment, the programmable logic controller is further configured to:
when the batch number of the current battery cell is the same as the batch number of the previous battery cell, determine that the size of the current battery cell is the same as the size of the previous battery cell.

In this way, the programmable logic controller is configured to determine that the two battery cells have the same size when the batch number of the current battery cell is the same as the batch number of the previous battery cell, thereby not triggering the battery top cover welding method of the embodiments of the present disclosure to press-fit the battery cell. The battery top cover welding method of the embodiments of the present disclosure is used to press-fit the battery cell only when they are different, which helps to improve the production efficiency of battery cells in top cover welding.

In an optional embodiment, the battery top cover welding system further includes: a loading device; and the programmable logic controller is specifically configured to:
acquire a two-dimensional code of the current battery cell from the loading device; and
determine the batch number of the current battery cell according to the two-dimensional code of the current battery cell.

In this way, the programmable logic controller is configured to acquire the batch number of the current battery cell through the two-dimensional code of the current battery cell, thereby determining whether the current battery cell is a new model battery cell. This is beneficial to improving the production efficiency of battery cells in top cover welding.

In an optional embodiment, the press-fitting device includes: a fixing mechanism; and the programmable logic controller is specifically configured to:
when battery cell press-fitting is to be performed on the current battery cell and it is determined that the size of the current battery cell is different from the size of the previous battery cell, control the fixing mechanism to fix the current battery cell and then move the current battery cell to the pre-press-fitting position.

In this way, the programmable logic controller is configured to first fix the current battery cell by controlling the fixing mechanism, and then move the current battery cell to the pre-press-fitting position, thus preventing damage to the current battery cell caused by directly press-fitting the current battery cell, thereby improving the production efficiency of battery cells in top cover welding.

In an optional embodiment, the press-fitting mechanism includes: an X-direction press-fitting assembly, a Y-direction press-fitting assembly, and a Z-direction press-fitting assembly; and the programmable logic controller is specifically configured to:
separately control the X-direction press-fitting assembly, the Y-direction press-fitting assembly, and the Z-direction press-fitting assembly to move, so as to make the X-direction press-fitting assembly, the Y-direction press-fitting assembly, and the Z-direction press-fitting assembly press-fit the current battery cell at the pre-press-fitting position.

In this way, the programmable logic controller is configured to separately control the movement of the X-direction press-fitting assembly, the Y-direction press-fitting assembly, and the Z-direction press-fitting assembly to press-fit the current battery cell at the pre-press-fitting position. In this way, further pressure can be applied to the current battery cell after pre-press-fitting, thereby achieving press-fitting of the current battery cell, and further improving the production efficiency of battery cells in top cover welding.

In an optional embodiment, the programmable logic controller is specifically configured to:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquire a movement displacement of the X-direction press-fitting assembly, a movement displacement of the Y-direction press-fitting assembly, and a movement displacement of the Z-direction press-fitting assembly.

In this way, the movement displacements of the press-fitting assemblies in different directions can be known through the programmable logic controller, which helps to determine the change value with respect to the preset movement displacement, thereby helping to improve the production efficiency of battery cells in top cover welding.

In an optional embodiment, a pressure module is further provided on the press-fitting mechanism, and the pressure module is configured to:
collect a pressure value applied by the press-fitting mechanism to the current battery cell; and
when the pressure value reaches the preset value, send a control signal to a servo probe of the press-fitting device; where
the servo probe of the press-fitting device is configured to control the press-fitting mechanism to stop moving according to the control signal.

In this way, the servo probe is controlled by pressure sensing, and the servo probe controls the press-fitting mechanism to stop moving, so as to stop press-fitting the current battery cell in a timely manner and prevent damage to the current battery cell during press-fitting.

In an optional embodiment, the preset movement displacement includes: an X-direction preset displacement, a Y-direction preset displacement, and a Z-direction preset displacement; and the programmable logic controller is specifically configured to:
calculate an X-direction difference between the movement displacement of the X-direction press-fitting assembly and the X-direction preset displacement;
calculate a Y-direction difference between the movement displacement of the Y-direction press-fitting assembly and the Y-direction preset displacement;
calculate a Z-direction difference between the movement displacement of the Z-direction press-fitting assembly and the Z-direction preset displacement; and
determine the X-direction difference, the Y-direction difference, and the Z-direction difference as the change value between the movement displacement of the press-fitting mechanism and the preset movement displacement.

This avoids the problems of being time-consuming, being labor-intensive, and having large errors caused by clamping and positioning battery cells of different models, thereby improving the production efficiency of battery cells in top cover welding.

An embodiment of the present disclosure provides a battery top cover welding method applied to a battery top cover welding system, where the battery top cover welding system includes: a programmable logic controller and a press-fitting device, and the method includes:
when battery cell press-fitting is to be performed on a current battery cell, and a size of the current battery cell is different from a size of a previous battery cell, controlling, by the programmable logic controller, the press-fitting device to make the current battery cell move to a pre-press-fitting position;
controlling, by the programmable logic controller, a press-fitting mechanism of the press-fitting device to move, so as to press-fit the current battery cell at the pre-press-fitting position;
when a pressure value exerted on the current battery cell reaches a preset value to cause the press-fitting mechanism to stop moving, acquiring, by the programmable logic controller, a movement displacement of the press-fitting mechanism; and
calculating, by the programmable logic controller, a change value between the movement displacement of the press-fitting mechanism and a preset movement displacement; where the change value is used for displacement compensation in battery cell press-fitting and subsequent processes after battery cell press-fitting in top cover welding; and the processes after battery cell press-fitting include: gap detection, battery cell pre-welding, battery cell full welding, battery cell rolling, and post-rolling detection.

The programmable logic controller performs pre-press-fitting on the current battery cell determined to have a different size from the previous battery cell during battery cell press-fitting, then performs press-fitting, when the pressure value exerted on the current battery cell reaches the preset value to cause the press-fitting mechanism to stop moving, acquires the movement displacement of the current battery cell at the press-fitting mechanism, and calculates the change value with respect to the preset movement displacement, so as to perform displacement compensation for battery cell press-fitting and subsequent processes after battery cell press-fitting in top cover welding. This enables intelligent clamping and positioning for battery cells of different sizes when battery cells of different sizes are produced in top cover welding, avoiding time-consuming, labor-intensive, and error-prone manual operations, thereby improving the production efficiency of battery cells in top cover welding.

In an optional embodiment, the method further includes:
acquiring, by the programmable logic controller, a batch number of the current battery cell; and
when the batch number of the current battery cell is different from a batch number of the previous battery cell, determining, by the programmable logic controller, that the size of the current battery cell is different from the size of the previous battery cell.

In this way, whether the current battery cell is a new model battery cell is determined by comparing the batch number of the current battery cell with the batch number of the previous battery cell, and then the battery top cover welding method proposed in the embodiments of the present disclosure is adopted for battery cell top cover welding of the new model battery cell, thereby improving the production efficiency of battery cells in top cover welding.

In an optional embodiment, the method further includes:
when the batch number of the current battery cell is the same as the batch number of the previous battery cell, determining, by the programmable logic controller, that the size of the current battery cell is the same as the size of the previous battery cell.

In this way, the programmable logic controller determines that the two battery cells have the same size when the batch number of the current battery cell is the same as the batch number of the previous battery cell, thereby not triggering the battery top cover welding method of the embodiments of the present disclosure to press-fit the battery cell. The battery top cover welding method of the embodiments of the present disclosure is used to press-fit the battery cell only when they are different, which helps to improve the production efficiency of battery cells in top cover welding.

In an optional embodiment, the battery top cover welding system further includes: a loading device; and the acquiring, by the programmable logic controller, a batch number of the current battery cell includes:
acquiring, by the programmable logic controller, a two-dimensional code of the current battery cell from the loading device; and
determining, by the programmable logic controller, the batch number of the current battery cell according to the two-dimensional code of the current battery cell.

In this way, the batch number of the current battery cell is acquired through the two-dimensional code of the current battery cell, thereby determining whether the current battery cell is a new model battery cell, which is beneficial to improving the production efficiency of battery cells in top cover welding.

In an optional embodiment, the press-fitting device includes: a fixing mechanism; and the when battery cell press-fitting is to be performed on a current battery cell, and a size of the current battery cell is different from a size of a previous battery cell, controlling, by the programmable logic controller, the press-fitting device to make the current battery cell move to a pre-press-fitting position includes:
when battery cell press-fitting is to be performed on the current battery cell, and the programmable logic controller determines that the size of the current battery cell is different from the size of the previous battery cell, controlling the fixing mechanism to fix the current battery cell and then move the current battery cell to the pre-press-fitting position.

In this way, the current battery cell is first fixed by the fixing mechanism, and then the current battery cell is moved to the pre-press-fitting position, thus performing pre-press-fitting on the current battery cell. This prevents damage to the current battery cell caused by directly press-fitting the current battery cell, thereby improving the production efficiency of battery cells in top cover welding.

In an optional embodiment, the press-fitting mechanism includes: an X-direction press-fitting assembly, a Y-direction press-fitting assembly, and a Z-direction press-fitting assembly; and the controlling, by the programmable logic controller, a press-fitting mechanism of the press-fitting device to move, so as to press-fit the current battery cell at the pre-press-fitting position includes:
separately controlling, by the programmable logic controller, the X-direction press-fitting assembly, the Y-direction press-fitting assembly, and the Z-direction press-fitting assembly to move, so as to make the X-direction press-fitting assembly, the Y-direction press-fitting assembly, and the Z-direction press-fitting assembly press-fit the current battery cell at the pre-press-fitting position.

In this way, the X-direction press-fitting assembly, the Y-direction press-fitting assembly, and the Z-direction press-fitting assembly are respectively controlled to move to press-fit the current battery cell, so that further pressure can be applied to the current battery cell after pre-press-fitting, thereby achieving press-fitting of the current battery cell at the pre-press-fitting position, and further improving the production efficiency of battery cells in top cover welding.

In an optional embodiment, the when a pressure value exerted on the current battery cell reaches a preset value to cause the press-fitting mechanism to stop moving, acquiring, by the programmable logic controller, a movement displacement of the current battery cell at the press-fitting mechanism includes:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquiring, by the programmable logic controller, a movement displacement of the X-direction press-fitting assembly, a movement displacement of the Y-direction press-fitting assembly, and a movement displacement of the Z-direction press-fitting assembly.

In this way, the movement displacements of the press-fitting assemblies in different directions can be known, which helps to determine the change value with respect to the preset movement displacement, thereby helping to improve the production efficiency of battery cells in top cover welding.

In an optional embodiment, a pressure module is further provided on the press-fitting mechanism, and the method further includes:
collecting, by the pressure module, a pressure value applied by the press-fitting mechanism to the current battery cell;
when the pressure value reaches the preset value, sending, by the pressure module, a control signal to a servo probe of the press-fitting device; and
controlling, by the servo probe of the press-fitting device, the press-fitting mechanism to stop moving according to the control signal.

In this way, the servo probe is controlled by the pressure module, and the servo probe controls the press-fitting mechanism to stop moving, so as to stop press-fitting the current battery cell in a timely manner and prevent damage to the current battery cell during press-fitting.

In an optional embodiment, the preset movement displacement includes: an X-direction preset displacement, a Y-direction preset displacement, and a Z-direction preset displacement; and the calculating, by the programmable logic controller, a change value between the movement displacement of the current battery cell at the press-fitting mechanism and a preset movement displacement includes:
calculating, by the programmable logic controller, the X-direction difference between the movement displacement of the X-direction press-fitting assembly and the X-direction preset displacement;
calculating, by the programmable logic controller, the Y-direction difference between the movement displacement of the Y-direction press-fitting assembly and the Y-direction preset displacement;
calculating, by the programmable logic controller, the Z-direction difference between the movement displacement of the Z-direction press-fitting assembly and the Z-direction preset displacement; and
determining, by the programmable logic controller, the X-direction difference, the Y-direction difference, and the Z-direction difference as the change value between the movement displacement of the press-fitting mechanism and the preset movement displacement.

This avoids the problems of being time-consuming, being labor-intensive, and having large errors caused by clamping and positioning battery cells of different models, thereby improving the production efficiency of battery cells in top cover welding.

An embodiment of the present disclosure provides a battery top cover welding method and system. The system includes: a programmable logic controller and a press-fitting device. The programmable logic controller is configured to: when battery cell press-fitting is to be performed on a current battery cell, and it is determined that a size of the current battery cell is different from a size of a previous battery cell, control the press-fitting device to make the current battery cell move to a pre-press-fitting position, control a press-fitting mechanism of the press-fitting device to move, so as to press-fit the current battery cell at the pre-press-fitting position, when a pressure value exerted on the current battery cell reaches a preset value to cause the press-fitting mechanism to stop moving, acquire a movement displacement of the press-fitting mechanism, and calculate a change value between the movement displacement of the press-fitting mechanism and a preset movement displacement, where the change value is used for displacement compensation in battery cell press-fitting and subsequent processes after battery cell press-fitting in top cover welding, and the subsequent processes after battery cell press-fitting include: gap detection, battery cell pre-welding, battery cell full welding, battery cell rolling, and post-rolling detection. That is, in the embodiments of the present disclosure, the programmable logic controller performs pre-press-fitting on the current battery cell determined to have a different size from the previous battery cell during battery cell press-fitting, then performs press-fitting, when the pressure value exerted on the current battery cell reaches the preset value to cause the press-fitting mechanism to stop moving, acquires the movement displacement of the press-fitting mechanism, and calculates the change value with respect to the preset movement displacement, so as to perform displacement compensation for battery cell press-fitting and subsequent processes after battery cell press-fitting in top cover welding. This enables intelligent clamping and positioning for battery cells of different sizes when battery cells of different sizes are produced in top cover welding, avoiding time-consuming, labor-intensive, and error-prone manual operations, thereby improving the production efficiency of battery cells in top cover welding.

### BRIEF DESCRIPTION OF DRAWINGS

FIG. 1 is a schematic flowchart of a top cover welding process in the related art;
FIG. 2 is a schematic structural diagram of an optional battery top cover welding system provided by an embodiment of the present disclosure;
FIG. 3 is a schematic flowchart of an optional battery top cover welding method provided by an embodiment of the present disclosure;
FIG. 4 is a schematic flowchart of an example of an optional battery top cover welding method provided by an embodiment of the present disclosure;
FIG. 5 is a schematic structural diagram of an optional press-fitting device provided by an embodiment of the present disclosure in which a current battery cell is at a press-fitting position, but an X-direction press-fitting assembly, a Y-direction press-fitting assembly, and a Z-direction press-fitting assembly have not performed press-fitting;
FIG. 6 is a schematic structural diagram of an X-direction press-fitting assembly and a Y-direction press-fitting assembly in an optional press-fitting device provided by an embodiment of the present disclosure;
FIG. 7 is a schematic structural diagram of an optional press-fitting device provided by an embodiment of the present disclosure in which a current battery cell is at a press-fitting position, and an X-direction press-fitting assembly, a Y-direction press-fitting assembly, and a Z-direction press-fitting assembly press-fit the current battery cell;
FIG. 8 is a schematic structural diagram of an optional press-fitting device provided by an embodiment of the present disclosure in which a current battery cell is at a press-fitting position, and an X-direction press-fitting assembly and a Y-direction press-fitting assembly press-fit the current battery; and
FIG. 9 is a schematic structural diagram of an optional press-fitting device provided by an embodiment of the present disclosure in which a current battery cell is at a press-fitting position, and a Y-direction press-fitting assembly press-fits the current battery.

Reference signs:
5. current battery cell; 6. bracket; 7. fixing mechanism; 71. fixing piece; 8. press-fitting mechanism; 81. X-direction press-fitting assembly; 811. first X-direction driving piece; 812. second X-direction driving piece; 813. first X-direction press-fitting piece; 814. second X-direction press-fitting piece; 815. X-direction moving component; 82. Y-direction press-fitting assembly; 821. Y-direction driving piece; 822. Y-direction press-fitting piece; 823. Y-direction moving component; 83. Z-direction press-fitting assembly; 831. Z-direction driving piece; 832. Z-direction press-fitting piece; and 833. Z-direction moving component.

### DETAILED DESCRIPTION OF EMBODIMENTS

The technical solutions in the embodiments of the present disclosure will be clearly and completely described below in conjunction with the drawings in the embodiments of the present disclosure.

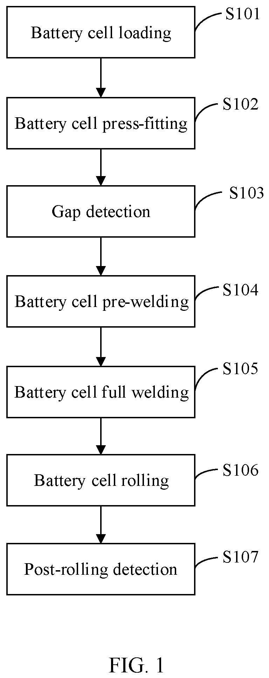

In the battery production process, top cover welding needs to be performed on battery cells. FIG. 1 is a schematic flowchart of a top cover welding process in the related art. As shown in FIG. 1, the top cover welding process may include:
S101: Battery cell loading.
S102: Battery cell press-fitting.
S103: Gap detection.
S104: Battery cell pre-welding.
S105: Battery cell full welding.
S106: Battery cell rolling.
S107: Post-rolling detection.

That is, in top cover welding, loading is first performed to obtain the battery cell, then the battery cell is press-fitted to obtain the press-fitted battery cell, then gap detection is performed on the press-fitted battery cell to obtain the battery cell after gap detection, pre-welding is performed on the battery cell after gap detection to obtain the pre-welded battery cell, full welding is performed on the pre-welded battery cell to obtain the full-welded battery cell, rolling is performed on the full-welded battery cell to obtain the rolled battery cell, and post-rolling detection is performed on the rolled battery cell to obtain the battery cell after post-rolling detection. It should be noted that other processes of top cover welding are also included after the above post-rolling detection, and the top cover welding process is not limited thereto.

In the related art, in top cover welding, for battery cells of different models, manual clamping and positioning is required in S102-S107, which is time-consuming and labor-intensive, and also affects the production efficiency of battery cells in top cover welding.

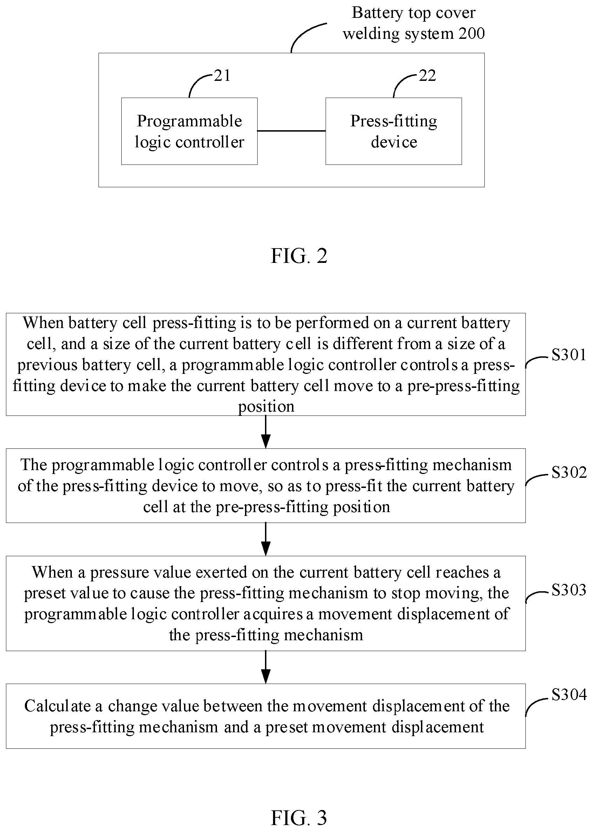

In order to improve the production efficiency of battery cells in top cover welding, an embodiment of the present disclosure provides a battery top cover welding method, and the method is applied to a battery top cover welding system. FIG. 2 is a schematic structural diagram of an optional battery top cover welding system provided by an embodiment of the present disclosure. As shown in FIG. 2, the battery top cover welding system 200 may include: a programmable logic controller (Programmable Logic Controller, PLC) 21 and a press-fitting device 22. The programmable logic controller 21 has a communication connection with the press-fitting device 22, the programmable logic controller 21 is configured to control the press-fitting device 22, and the press-fitting device 22 is configured to perform the battery cell press-fitting process under the control of the programmable logic controller 21.

Based on the battery top cover welding system 200 provided in the FIG. 2, an embodiment of the present disclosure provides a battery top cover welding method. FIG. 3 is a schematic flowchart of an optional battery top cover welding method provided by an embodiment of the present disclosure. As shown in FIG. 3, the battery top cover welding method may include:

S301: When battery cell press-fitting is to be performed on a current battery cell, and a size of the current battery cell is different from a size of a previous battery cell, a programmable logic controller controls a press-fitting device to make the current battery cell move to a pre-press-fitting position.

In S301, for the current battery cell in top cover welding, the loading device first performs battery cell loading to obtain the current battery cell, and then the press-fitting device performs battery cell press-fitting on the current battery cell. When battery cell press-fitting is to be performed on the current battery cell, the programmable logic controller first determines whether the size of the current battery cell is the same as the size of the previous battery cell on which battery cell press-fitting was performed. If the same, it means that the current battery cell is a battery cell of the same model as the previous battery cell, no re-clamping and positioning is required in S102-S107, and only top cover welding needs to be performed according to the process of the previous battery cell. If different, it means that the current battery cell is a battery cell of a different model from the previous battery cell, and re-clamping and positioning is required in S102-S107. Here, in order to avoid the impact of manual re-positioning on production efficiency, in the embodiments of the present disclosure, when the size of the current battery cell is different from the size of the previous battery cell, the programmable logic controller controls the press-fitting device to make the current battery cell move to the pre-press-fitting position.

The above press-fitting device is provided with a fixing assembly. Here, the programmable logic controller controls the fixing assembly of the press-fitting device to move the current battery cell to the pre-press-fitting position.

S302: The programmable logic controller controls a press-fitting mechanism of the press-fitting device to move, so as to press-fit the current battery cell at the pre-press-fitting position.

After the programmable logic controller moves the current battery cell to the pre-press-fitting position through S301, the programmable logic controller controls the press-fitting mechanism to move. Here, the programmable logic controller controls the press-fitting mechanism to work so as to make the press-fitting mechanism move, thereby achieving press-fitting of the current battery cell.

The press-fitting mechanism includes: an X-direction press-fitting assembly, a Y-direction press-fitting assembly, and a Z-direction press-fitting assembly. The programmable logic controller separately controls the X-direction press-fitting assembly, the Y-direction press-fitting assembly, and the Z-direction press-fitting assembly in the press-fitting mechanism to move, thereby achieving press-fitting of the current battery cell at the pre-press-fitting position.

S303: When a pressure value exerted on the current battery cell reaches a preset value to cause the press-fitting mechanism to stop moving, the programmable logic controller acquires a movement displacement of the press-fitting mechanism.

In S302, the programmable logic controller controls the press-fitting mechanism to move to achieve press-fitting of the current battery cell at the pre-press-fitting position. A pressure module installed on the press-fitting mechanism can be configured to detect the pressure value exerted on the current battery cell. Only when the pressure value exerted on the current battery cell reaches the preset value to cause the press-fitting mechanism to stop moving, and when the programmable logic controller detects that the press-fitting mechanism stops moving, the programmable logic controller can acquire the movement displacement of the press-fitting mechanism. Here, the acquired movement displacement is from an initial position of the press-fitting mechanism to a stop position.

The movement displacement of the above press-fitting mechanism may include: a movement displacement of the X-direction press-fitting assembly, a movement displacement of the Y-direction press-fitting assembly, and a movement displacement of the Z-direction press-fitting assembly.

In addition, the preset value may include: a preset first pressure value corresponding to the X-direction press-fitting assembly, a preset second pressure value corresponding to the Y-direction press-fitting assembly, and a preset third pressure value corresponding to the Z-direction press-fitting assembly.

S304: The programmable logic controller calculates a change value between the movement displacement of the press-fitting mechanism and a preset movement displacement.

In S304, after acquiring the movement displacement of the press-fitting mechanism, the programmable logic controller can calculate the change value between the movement displacement of the press-fitting mechanism and the preset movement displacement, where the change value is used for displacement compensation in battery cell press-fitting and subsequent processes after battery cell press-fitting in top cover welding. The preset movement displacement may be obtained as follows: a standard battery cell is determined based on actual experience, press-fitting is performed on the standard battery cell, after press-fitting is performed in place, the movement displacement of the X-direction press-fitting assembly in battery cell press-fitting of the standard battery cell, the movement displacement of the Y-direction press-fitting assembly in battery cell press-fitting of the standard battery cell, and the movement displacement of the Z-direction press-fitting assembly in battery cell press-fitting of the standard battery cell are recorded, namely (X', Y', Z'), which can be used as the preset movement displacement.

The subsequent processes after battery cell press-fitting include: gap detection, battery cell pre-welding, battery cell full welding, battery cell rolling, and post-rolling detection. That is, after the change value between the movement displacement of the press-fitting mechanism and the preset movement displacement is calculated, the change value can be used in S102 for displacement compensation to press-fit battery cells of the same size as the current battery cell subsequently, and the change value can also be used in S103-S107 for displacement compensation to perform processes after battery cell press-fitting on battery cells of the same size as the current battery cell. This avoids the problems of being time-consuming, being labor-intensive, and having large errors caused by manual clamping and positioning, thereby improving the production efficiency of battery cells in top cover welding.

In order to determine whether the size of the current battery cell is the same as the size of the previous battery cell, in an optional embodiment, the above method may further include:
acquiring, by the programmable logic controller, a batch number of the current battery cell; and
when the batch number of the current battery cell is different from a batch number of the previous battery cell, determining, by the programmable logic controller, that the size of the current battery cell is different from the size of the previous battery cell.

Understandably, the programmable logic controller first acquires the batch number of the current battery cell, where the batch number here is generally obtained by identifying the two-dimensional code of the current battery cell; then after acquiring the batch number of the current battery cell, compares the batch number of the current battery cell with the batch number of the previous battery cell; and when the comparison shows that the batch number of the current battery cell is different from the batch number of the previous battery cell, that is, they do not belong to the same batch of battery cells, determines that the size of the current battery cell is different from the size of the previous battery cell, that is, the current battery cell is a new model battery cell.

In this way, whether the current battery cell is a new model battery cell is determined by comparing the batch number of the current battery cell with the batch number of the previous battery cell, and then the battery top cover welding method proposed in the embodiments of the present disclosure is adopted for battery cell top cover welding of the new model battery cell, thereby improving the production efficiency of battery cells in top cover welding.

In an optional embodiment, the above method may further include:
when the batch number of the current battery cell is the same as the batch number of the previous battery cell, determining, by the programmable logic controller, that the size of the current battery cell is the same as the size of the previous battery cell.

Understandably, when the comparison shows that the batch number of the current battery cell is the same as the batch number of the previous battery cell, that is, they belong to the same batch of battery cells, it is determined that the size of the current battery cell is the same as the size of the previous battery cell, that is, the current battery cell is not a new model battery cell.

In this way, the programmable logic controller is configured to determine that the two battery cells have the same size when the batch number of the current battery cell is the same as the batch number of the previous battery cell, thereby not triggering the battery top cover welding method of the embodiments of the present disclosure to press-fit the battery cell, and use the battery top cover welding method of the embodiments of the present disclosure to press-fit the battery cell only when they are different, which helps to improve the production efficiency of battery cells in top cover welding.

Further, in order to acquire the batch number of the current battery cell, in an optional embodiment, the battery top cover welding system may further include: a loading device; and the acquiring, by the programmable logic controller, a batch number of the current battery cell may include:
acquiring, by the programmable logic controller, a two-dimensional code of the current battery cell from the loading device; and
determining, by the programmable logic controller, the batch number of the current battery cell according to the two-dimensional code of the current battery cell.

Understandably, in top cover welding, battery cell loading is also included before battery cell press-fitting, where battery cell loading is completed by the loading device. After acquiring the current battery cell, the loading device acquires the two-dimensional code of the current battery cell and sends the two-dimensional code to the programmable logic controller. After acquiring the two-dimensional code of the current battery cell, the programmable logic controller identifies the two-dimensional code to acquire the batch number of the current battery cell.

In this way, the batch number of the current battery cell is acquired through the two-dimensional code of the current battery cell, thereby determining whether the current battery cell is a new model battery cell, which is beneficial to improving the production efficiency of battery cells in top cover welding.

In order to achieve press-fitting of the new model battery cell, in an optional embodiment, the press-fitting device includes: a fixing mechanism; and S301 may include:
when battery cell press-fitting is to be performed on the current battery cell, and the programmable logic controller determines that the size of the current battery cell is different from the size of the previous battery cell, controlling the fixing mechanism to fix the current battery cell and then move the current battery cell to the pre-press-fitting position.

Understandably, when the current battery cell is subjected to battery cell press-fitting, when determining that the size of the current battery cell is different from the size of the previous battery cell, the programmable logic controller controls the fixing mechanism to fix the current battery cell, and after the current battery cell is fixed, controls the fixing mechanism to move the current battery cell to the pre-press-fitting position. Thus, the current battery cell is moved to the pre-press-fitting position.

In this way, the current battery cell is first fixed by the fixing mechanism, and then the current battery cell is moved to the pre-press-fitting position, thus performing pre-press-fitting on the current battery cell, preventing damage to the current battery cell caused by directly press-fitting the current battery cell, thereby improving the production efficiency of battery cells in top cover welding.

After pre-press-fitting, in order to achieve press-fitting of the current battery cell, in an optional embodiment, the press-fitting mechanism includes: an X-direction press-fitting assembly, a Y-direction press-fitting assembly, and a Z-direction press-fitting assembly, and S302 may include:
separately controlling, by the programmable logic controller, the X-direction press-fitting assembly, the Y-direction press-fitting assembly, and the Z-direction press-fitting assembly to move, so as to make the X-direction press-fitting assembly, the Y-direction press-fitting assembly, and the Z-direction press-fitting assembly press-fit the current battery cell at the pre-press-fitting position.

Understandably, after pre-press-fitting, the programmable logic controller respectively controls a first X-direction driving piece and a second X-direction driving piece of the X-direction press-fitting assembly to make a first X-direction press-fitting piece and a second X-direction press-fitting piece move, controls a Y-direction driving piece of the Y-direction press-fitting assembly to make a Y-direction press-fitting piece move, and controls a Z-direction driving piece of the Z-direction press-fitting assembly to make a Z-direction press-fitting piece move. Herein, the first X-direction driving piece, the second X-direction driving piece, the Y-direction driving piece, and the Z-direction driving piece may be controlled to move simultaneously respectively to press-fit the current battery cell.

In this way, the X-direction press-fitting assembly, the Y-direction press-fitting assembly, and the Z-direction press-fitting assembly are respectively controlled to move to press-fit the current battery cell at the pre-press-fitting position, so that further pressure can be applied to the current battery cell after pre-press-fitting, thereby achieving press-fitting of the current battery cell, and further improving the production efficiency of battery cells in top cover welding.

In order to complete press-fitting of the current battery cell and implement intelligent model change for battery cells of different models, in an optional embodiment, S303 may include:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquiring, by the programmable logic controller, a movement displacement of the X-direction press-fitting assembly, a movement displacement of the Y-direction press-fitting assembly, and a movement displacement of the Z-direction press-fitting assembly.

Understandably, for the X-direction press-fitting assembly, when the pressure value exerted on the current battery cell by the X-direction press-fitting assembly reaches the preset first pressure value, the X-direction press-fitting assembly stops moving, and when the pressure value exerted on the current battery cell by the Y-direction press-fitting assembly reaches the preset second pressure value, the Y-direction press-fitting assembly stops moving, and when the pressure value exerted on the current battery cell by the Z-direction press-fitting assembly reaches the preset third pressure value, the Y-direction press-fitting assembly stops moving. At this time, it is determined that the current battery cell has been press-fitted. In order to intelligently complete battery cell model change for the current battery cell of this model so as to perform battery cell top cover welding of a next battery cell of the same model, here, the programmable logic controller acquires the movement displacements of the press-fitting assemblies in different directions.

The movement displacements of the press-fitting assemblies in different directions may include: the movement displacement of the X-direction press-fitting assembly, the movement displacement of the Y-direction press-fitting assembly, and the movement displacement of the Z-direction press-fitting assembly.

In this way, the movement displacements of the press-fitting assemblies in different directions can be known, which helps to determine the change value with respect to the preset movement displacement, thereby helping to improve the production efficiency of battery cells in top cover welding.

Further, in order to achieve that when the pressure value exerted on the current battery cell by the press-fitting mechanism reaches the preset value, the press-fitting mechanism stops moving, in an optional embodiment, a pressure module is further provided on the press-fitting mechanism, and the above method may further include:
collecting, by the pressure module, a pressure value applied by the press-fitting mechanism to the current battery cell;
when the pressure value reaches the preset value, sending, by the pressure module, a control signal to a servo probe of the press-fitting device; and
controlling, by the servo probe of the press-fitting device, the press-fitting mechanism to stop moving according to the control signal.

Understandably, press-fitting pieces are provided on the press-fitting assemblies of the press-fitting mechanism, and pressure modules are provided on the press-fitting pieces: an X-direction corresponding pressure module, a Y-direction corresponding pressure module, and a Z-direction corresponding pressure module. In this way, the X-direction corresponding pressure module collects the pressure value applied in the X direction to the current battery cell, the Y-direction corresponding pressure module collects the pressure value applied in the Y direction to the current battery cell, and the Z-direction corresponding pressure module collects the pressure value applied in the Z direction to the current battery cell. Then, when the pressure value applied by the X-direction corresponding pressure module to the current battery cell is greater than the first preset value, the pressure value applied by the Y-direction corresponding pressure module to the current battery cell is greater than the second preset value, and the pressure value applied by the Z-direction corresponding pressure module to the current battery cell is greater than the third preset value, that is, when the pressure value reaches the preset value, the X-direction corresponding pressure module sends a first control signal to the X-direction servo probe of the press-fitting device, the Y-direction corresponding pressure module sends a second control signal to the Y-direction servo probe of the press-fitting device, and the Z-direction corresponding pressure module sends a third control signal to the Z-direction servo probe of the press-fitting device.

After receiving the first control signal, the X-direction servo probe controls the X-direction servo motor to stop working, so that the X-direction press-fitting assembly stops moving. After receiving the second control signal, the Y-direction servo probe controls the Y-direction servo motor to stop working, so that the Y-direction press-fitting assembly stops moving. After receiving the third control signal, the Z-direction servo probe controls the Z-direction servo motor to stop working, so that the Z-direction press-fitting assembly stops moving.

In this way, the servo probe is controlled by the pressure module, and the servo probe controls the servo motor so that the press-fitting mechanism can stop moving, so as to stop press-fitting the current battery cell in a timely manner and prevent damage to the current battery cell during press-fitting.

In order to calculate the change value used for displacement compensation in battery cell press-fitting and subsequent processes after battery cell press-fitting in top cover welding, in an optional embodiment, the preset movement displacement includes: an X-direction preset displacement, a Y-direction preset displacement, and a Z-direction preset displacement; and the calculating, by the programmable logic controller, a change value between the movement displacement of the press-fitting mechanism and a preset movement displacement may include:
calculating, by the programmable logic controller, an X-direction difference between the movement displacement of the X-direction press-fitting assembly and the X-direction preset displacement;
calculating, by the programmable logic controller, a Y-direction difference between the movement displacement of the Y-direction press-fitting assembly and the Y-direction preset displacement;
calculating, by the programmable logic controller, a Z-direction difference between the movement displacement of the Z-direction press-fitting assembly and the Z-direction preset displacement; and
determining, by the programmable logic controller, the X-direction difference, the Y-direction difference, and the Z-direction difference as the change value between the movement displacement of the press-fitting mechanism and the preset movement displacement.

It can be understood that, after the programmable logic controller obtains the movement displacement of the press-fitting mechanism, since the preset movement displacement is pre-stored, that is, the preset movement displacement is known, the difference between the movement displacement of the X-direction press-fitting assembly and the X-direction preset displacement among the preset movement displacement can be calculated, which is the X-direction difference. The difference between the movement displacement of the Y-direction press-fitting assembly and the Y-direction preset displacement is calculated, which is the Y-direction difference. The difference between the movement displacement of the Z-direction press-fitting assembly and the Z-direction preset displacement is calculated, which is the Z-direction difference.

The X-direction difference, Y-direction difference, and Z-direction difference are determined as the change values. By using these change values, model change can be performed in the battery cell press-fitting process, and model change can also be performed in processes from S102 to S107 after battery cell press-fitting, so as to realize displacement compensation for battery cell press-fitting and the processes after battery cell press-fitting.

This avoids the problems of being time-consuming, being labor-intensive, and having large errors caused by clamping and positioning battery cells of different models, thereby improving the production efficiency of battery cells in top cover welding.

The battery top cover welding method in one or more of the above embodiments is described below with an example.

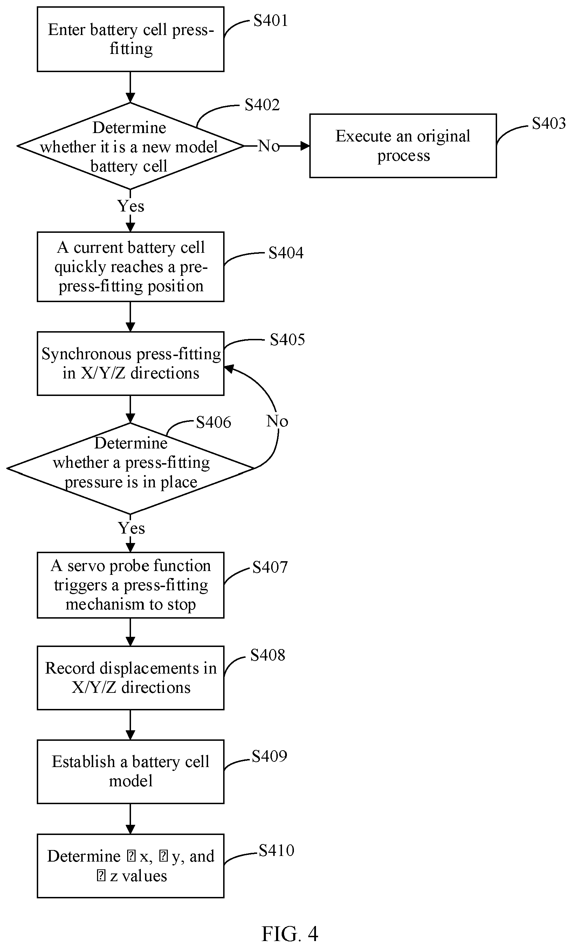

FIG. 4 is a schematic flowchart of an example of an optional battery top cover welding method provided by an embodiment of the present disclosure. As shown in FIG. 4, the battery top cover welding method may include:
S401: Enter battery cell press-fitting.

Specifically, when top cover welding is to be performed on the battery cell, the PLC controls the loading device to perform loading to obtain the current battery cell, and performs battery cell press-fitting on the current battery cell.

S402: Determine whether it is a new model battery cell. If not, execute S403; and if yes, execute S404.

S403: Execute an original process.

Specifically, the PLC identifies the two-dimensional code according to the two-dimensional code of the current battery cell acquired from the loading device, so as to acquire the batch number of the current battery cell; compares whether the batch number of the current battery cell is the same as the batch number of the previous battery cell; if the same, executes the original process, that is, executes the same process as the process of the previous battery cell of the same size and model; and if different, determines that the current battery cell is a new model battery cell, and executes S404.

S404: The current battery cell quickly reaches a pre-press-fitting position.

Specifically, a fixing mechanism is provided on the press-fitting device, and the fixing mechanism fixes the current battery cell, and then moves the current battery cell to the pre-press-fitting position.

S405: Synchronous press-fitting in X/Y/Z directions.

Specifically, after the current battery cell moves to the pre-press-fitting position, the PLC controls the X-direction press-fitting assembly to move, the PLC controls the Y-direction press-fitting assembly to move, and the PLC controls the Z-direction press-fitting assembly to move, so as to achieve synchronous press-fitting in X/Y/Z directions.

S406: Determine whether a press-fitting pressure is in place. If yes, execute S407; and if not, execute S405.

S407: A servo probe function triggers a press-fitting mechanism to stop.

Specifically, the PLC determines whether the press-fitting pressures in the X/Y/Z directions are in place. The X-direction corresponding pressure module determines whether the press-fitting pressure in the X direction reaches the preset first pressure value, the Y-direction corresponding pressure module determines whether the press-fitting pressure in the Y direction reaches the preset second pressure value, and the Z-direction corresponding pressure module determines whether the press-fitting pressure in the Z direction reaches the preset third pressure value. If all pressures are in place, the pressure module in each direction sends a control signal to the servo probe in each direction, so that the servo probe function in each direction is triggered to stop the movement of the press-fitting mechanism.

S408: Record displacements in X/Y/Z directions.

S409: Establish a battery cell model.

S410: Determine Δx, Δy, and Δz.

Specifically, after the press-fitting mechanism stops, the PLC records the displacements of the press-fitting mechanism in the X/Y/Z directions at this time, namely (X1, Y1, Z1), based on which a battery cell model is established. Since the movement displacement after in-place press-fitting of the standard battery cell is (X', Y', Z'), Δx=X1-X', Δy=Y1-Y', Δz=Z1-Z'. Based on this, displacement compensation is achieved for S102 and S103-S107.

That is, in this example, when a new model lithium battery first enters the top cover welding device, the battery to be press-fitted at S101 station enters the battery cell press-fitting position in S102 through magnetic drive. After the lithium battery at the press-fitting position stops stably, the fixing mechanism fixes the battery cell and then moves the battery cell to the pre-press-fitting position. Then, press-fitting servo axes in three directions: press-fitting X direction, press-fitting Y direction, and press-fitting Z direction all enter a slow press-fitting process. When the pressure modules in the three directions all reach the preset pressure values, a servo probe stop command is triggered. The program records the movement displacements of the press-fitting assemblies in all directions. A new model lithium battery model is established through a program algorithm. The change values Δx, Δy, Δz in the three directions of the new model lithium battery are obtained, and the clamping servo axes of subsequent stations such as S102 and S103-S107 are automatically compensated accordingly.

The embodiments of the present disclosure provide a battery top cover welding method, and the battery top cover welding system includes: a programmable logic controller and a press-fitting device. The programmable logic controller is configured to: when battery cell press-fitting is to be performed on the current battery cell, determine that the size of the current battery cell is different from the size of the previous battery cell, control the press-fitting device to make the current battery cell move to the pre-press-fitting position, control the press-fitting mechanism of the press-fitting device to move, so as to press-fit the current battery cell at the pre-press-fitting position, when the pressure value exerted on the current battery cell reaches the preset value to cause the press-fitting mechanism to stop moving, acquire the movement displacement of the press-fitting mechanism, and calculate the change value between the movement displacement of the press-fitting mechanism and the preset movement displacement, where the change value is used for displacement compensation in battery cell press-fitting and subsequent processes after battery cell press-fitting in top cover welding, and the subsequent processes after battery cell press-fitting include: gap detection, battery cell pre-welding, battery cell full welding, battery cell rolling, and post-rolling detection. That is, in the embodiments of the present disclosure, the programmable logic controller performs pre-press-fitting on the current battery cell determined to have a different size from the previous battery cell during battery cell press-fitting, then performs press-fitting, when the pressure value exerted on the current battery cell reaches the preset value to cause the press-fitting mechanism to stop moving, acquires the movement displacement of the press-fitting mechanism, and calculates the change value with respect to the preset movement displacement, so as to perform displacement compensation for battery cell press-fitting and subsequent processes after battery cell press-fitting in top cover welding. This enables intelligent clamping and positioning for battery cells of different sizes when battery cells of different sizes are produced in top cover welding, avoiding time-consuming, labor-intensive, and error-prone manual operations, thereby improving the production efficiency of battery cells in top cover welding.

Based on the same inventive concept of the foregoing embodiments, an embodiment of the present disclosure provides a battery top cover welding system, as shown in FIG. 2, which may include: a programmable logic controller 21 and a press-fitting device 22. The programmable logic controller 21 is configured to:
when battery cell press-fitting is to be performed on a current battery cell, and a size of the current battery cell is different from a size of a previous battery cell, control the press-fitting device 22 to make the current battery cell move to a pre-press-fitting position;
control a press-fitting mechanism of the press-fitting device 22 to move, so as to press-fit the current battery cell at the pre-press-fitting position; and
when a pressure value exerted on the current battery cell reaches a preset value to cause the press-fitting mechanism to stop moving, acquire a movement displacement of the press-fitting mechanism; and
calculate a change value between the movement displacement of the press-fitting mechanism and a preset movement displacement; where the change value is used for displacement compensation in battery cell press-fitting and subsequent processes after battery cell press-fitting in top cover welding, and the subsequent processes after battery cell press-fitting include: gap detection, battery cell pre-welding, battery cell full welding, battery cell rolling, and post-rolling detection.

In an optional embodiment, the programmable logic controller 21 is further configured to:
acquire a batch number of the current battery cell; and when the batch number of the current battery cell is different from a batch number of the previous battery cell, determine that the size of the current battery cell is different from the size of the previous battery cell.

In an optional embodiment, the programmable logic controller 21 is further configured to:
when the batch number of the current battery cell is the same as the batch number of the previous battery cell, determine that the size of the current battery cell is the same as the size of the previous battery cell.

In an optional embodiment, the battery top cover welding system further includes: a loading device; and the programmable logic controller 21 is specifically configured to:
acquire a two-dimensional code of the current battery cell from the loading device; and
determine the batch number of the current battery cell according to the two-dimensional code of the current battery cell.

In an optional embodiment, the press-fitting device 22 includes: a fixing mechanism; and the programmable logic controller 21 is specifically configured to:
when battery cell press-fitting is to be performed on the current battery cell and it is determined that the size of the current battery cell is different from the size of the previous battery cell, control the fixing mechanism to fix the current battery cell and then move the current battery cell to the pre-press-fitting position.

In an optional embodiment, the press-fitting mechanism includes: an X-direction press-fitting assembly, a Y-direction press-fitting assembly, and a Z-direction press-fitting assembly; and the programmable logic controller 21 is specifically configured to: separately control the X-direction press-fitting assembly, the Y-direction press-fitting assembly, and the Z-direction press-fitting assembly of the press-fitting device 22 to move, so as to make the X-direction press-fitting assembly, the Y-direction press-fitting assembly, and the Z-direction press-fitting assembly press-fit the current battery cell at the pre-press-fitting position.

In an optional embodiment, the programmable logic controller 21 is specifically configured to:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquire a movement displacement of the X-direction press-fitting assembly, a movement displacement of the Y-direction press-fitting assembly, and a movement displacement of the Z-direction press-fitting assembly.

In an optional embodiment, a pressure module is further provided on the press-fitting mechanism, and the pressure module is configured to:
collect a pressure value applied by the press-fitting mechanism to the current battery cell; and
when the pressure value reaches the preset value, send a control signal to a servo probe of the press-fitting device 22; where
the servo probe of the press-fitting device 22 is configured to control the press-fitting mechanism to stop moving according to the control signal.

In an optional embodiment, the preset movement displacement includes: an X-direction preset displacement, a Y-direction preset displacement, and a Z-direction preset displacement; and the programmable logic controller 21 is specifically configured to:
calculate an X-direction difference between the movement displacement of the X-direction press-fitting assembly and the X-direction preset displacement;
calculate a Y-direction difference between the movement displacement of the Y-direction press-fitting assembly and the Y-direction preset displacement;
calculate a Z-direction difference between the movement displacement of the Z-direction press-fitting assembly and the Z-direction preset displacement; and
determine the X-direction difference, the Y-direction difference, and the Z-direction difference as the change value between the movement displacement of the press-fitting mechanism and the preset movement displacement.

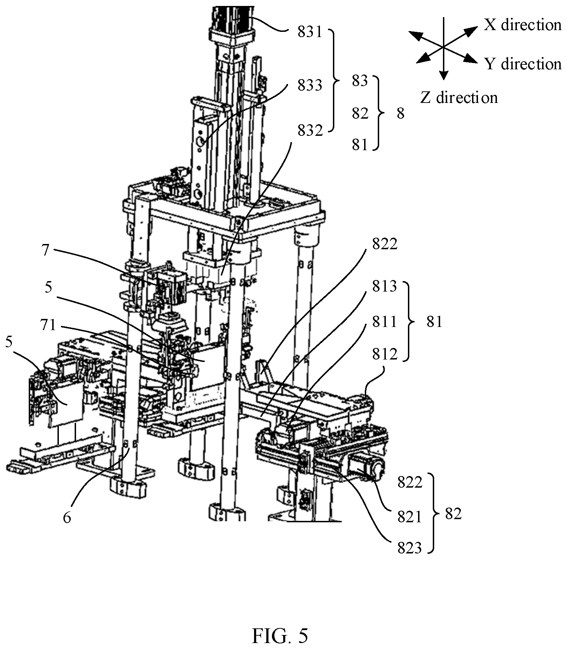

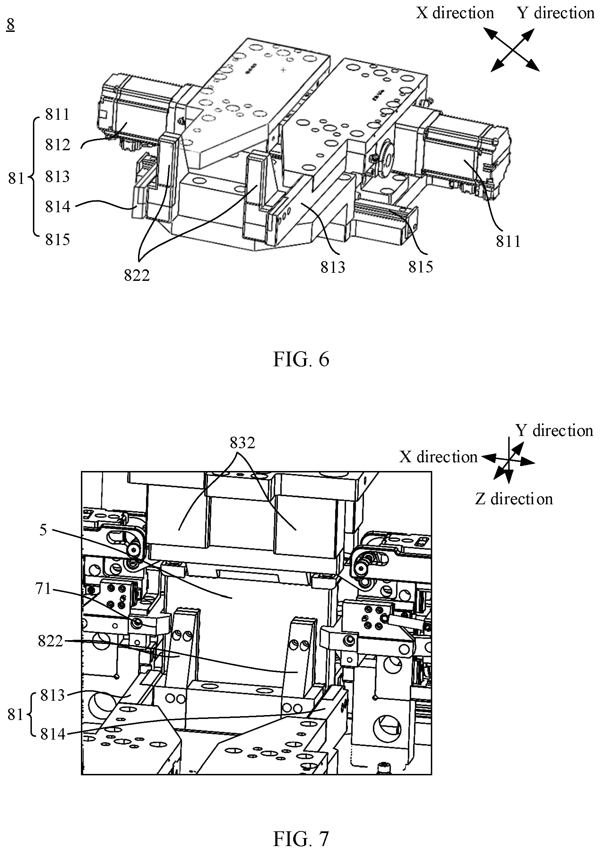

An embodiment of the present disclosure further provides a press-fitting device of battery. Referring to FIG. 5, FIG. 6, and FIG. 7, the press-fitting device of battery includes a bracket 6, a fixing mechanism 7, and a press-fitting mechanism 8. The fixing mechanism 7 and the press-fitting mechanism 8 are both provided on the bracket 6. The fixing mechanism 7 is configured to fix a current battery cell 5 and move the current battery cell 5 to a pre-press-fitting position, and the press-fitting mechanism 8 press-fits the current battery cell 5 located at the pre-press-fitting position.

In the embodiments of the present disclosure, the fixing mechanism 7 includes a fixing piece 71, and the fixing piece 71 is configured to fix the current battery cell 5. One or more fixing pieces 71 may be provided. When multiple fixing pieces 71 are provided, the multiple fixing pieces 71 can fix different positions of the current battery cell 5. Here, it should be supplemented that the embodiments of the present disclosure do not limit the number of fixing pieces 71 and the specific positions where the fixing pieces 71 act on the current battery cell 5.

In the embodiments of the present disclosure, when multiple fixing pieces 71 are provided, the fixing mechanism 7 further includes an adjusting piece. The adjusting piece can adjust the distance between two opposite fixing pieces 71 among the multiple fixing pieces 71, thus adapting to the fixing of current battery cells 5 of different sizes.

In the embodiments of the present disclosure, the fixing mechanism 7 is configured to fix the current battery cell 5 and move the current battery cell 5 to the pre-press-fitting position. The fixing mechanism 7 includes a moving assembly. Specifically, the moving assembly is provided on the bracket 6, and the fixing piece 71 is provided on the moving assembly. When the fixing piece 71 fixes the current battery cell 5, the moving assembly moves the fixing piece 71 and the current battery cell 5 fixed by the fixing piece 71 to the pre-press-fitting position. Certainly, the fixing piece 71 can also be moved to the pre-press-fitting position first and then the current battery cell 5 is fixed. Here, the embodiments of the present disclosure do not pose limitations. In an achievable implementation provided by the embodiments of the present disclosure, the fixing piece 71 first fixes the current battery cell 5, and then the moving assembly moves the fixing piece 71 and the current battery cell 5 fixed by the fixing piece 71 to the pre-press-fitting position, thus facilitating the fixing of the current battery cell 5 by the fixing piece 71.

In the embodiments of the present disclosure, the moving assembly may include a slide rail and a slide block. The slide rail extends in a direction moving toward the pre-press-fitting position, and the slide block is provided on the fixing piece 71. The slide block can move relative to the slide rail to drive the fixing piece 71 and the current battery cell 5 fixed by the fixing piece 71 to move to the pre-press-fitting position. Here, it should be supplemented that the moving assembly can alternatively be implemented in other manners, and the embodiments of the present disclosure do not pose limitations.

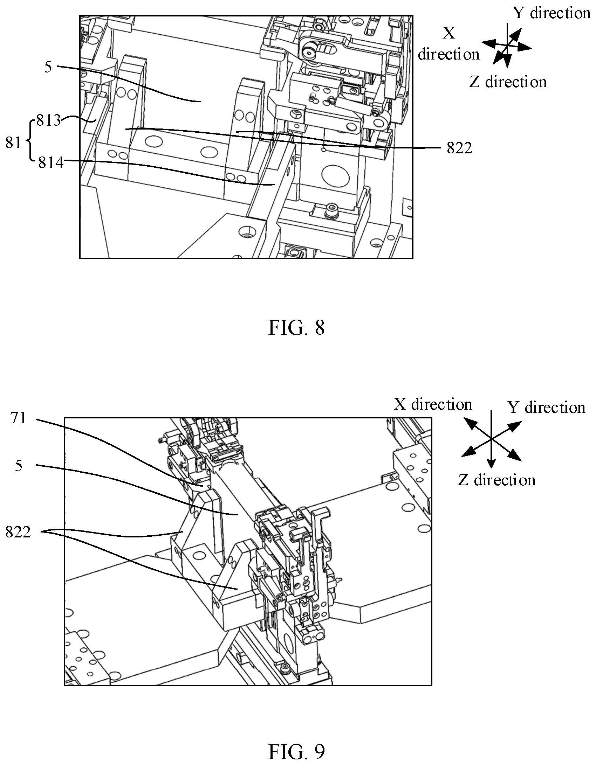

Referring to FIG. 5, FIG. 6, FIG. 8, and FIG. 9, in the embodiments of the present disclosure, the press-fitting mechanism 8 can press-fit the current battery cell 5 located at the pre-press-fitting position. The press-fitting mechanism 8 includes an X-direction press-fitting assembly 81, a Y-direction press-fitting assembly 82, and a Z-direction press-fitting assembly 83. The X-direction press-fitting assembly 81 press-fits the current battery cell 5 located at the pre-press-fitting position in the X direction, the Y-direction press-fitting assembly 82 press-fits the current battery cell 5 located at the pre-press-fitting position in the Y direction, and the Z-direction press-fitting assembly 83 press-fits the current battery cell 5 located at the pre-press-fitting position in the Z direction, thus achieving press-fitting in three directions of the current battery cell 5 located at the pre-press-fitting position.

The Y direction of the current battery cell 5 is a direction in which two largest sides of the current battery cell 5 are arranged opposite. The X direction of the current battery cell 5 is a direction in which two side walls of the current battery cell 5 that are not provided with a top cover are arranged opposite. The Z direction of the current battery cell 5 is a direction in which a side wall provided with the top cover of the current battery cell 5 faces towards the opposite side wall.

Specifically, in order to press-fit both largest sides of the current battery cell 5, the press-fitting mechanism 8 includes two Y-direction press-fitting assemblies 82. One Y-direction press-fitting assembly 82 is provided on a side of one largest side of the current battery cell 5, and the other Y-direction press-fitting assembly 82 is provided on a side of the other largest side of the current battery cell 5. Thus, both largest sides of the current battery cell 5 can be press-fitted. Here, it should also be noted that the positions where the two Y-direction press-fitting assemblies 82 respectively perform press-fitting on the two largest sides of the current battery cell 5 can be completely the same, partially the same, or completely different, and the embodiments of the present disclosure do not pose limitations.

One of the Y-direction press-fitting assemblies 82 is used as an example. The Y-direction press-fitting assembly 82 includes a Y-direction press-fitting piece 822 and a Y-direction driving piece 821. The Y-direction driving piece 821 is connected to the Y-direction press-fitting piece 822, and the Y-direction driving piece 821 provides power and pressure for the Y-direction press-fitting piece 822 to move in the Y direction of the current battery cell 5.

In the embodiments of the present disclosure, the Y-direction driving piece 821 provides power and pressure for the Y-direction press-fitting piece 822 to move in the Y direction of the current battery cell 5. Here, the Y-direction driving piece 821 may be a driving motor, and the driving motor directly provides power and pressure for the Y-direction press-fitting piece 822 to move in the Y direction of the current battery cell 5. Here, the Y-direction driving piece 821 may be a hydraulic pump, and the hydraulic pump directly provides power and pressure for the Y-direction press-fitting piece 822 to move in the Y direction of the current battery cell 5. It should be supplemented that the embodiments of the present disclosure do not limit the specific form of the Y-direction driving piece 821.

In the embodiments of the present disclosure, the Y-direction driving piece 821 provides power and pressure for the Y-direction press-fitting piece 822 to move in the Y direction of the current battery cell 5. In order to make the movement of the Y-direction press-fitting piece 822 in the Y direction of the current battery cell 5 more stable, the Y-direction press-fitting assembly 82 further includes a Y-direction moving component 823. In an achievable implementation provided by the embodiments of the present disclosure, the Y-direction press-fitting component further includes a Y-direction guide rail. The Y-direction guide rail extends in the Y direction moving toward the current battery cell 5. A Y-direction slide block is provided on the Y-direction press-fitting piece 822. The Y-direction slide block is connected to the Y-direction driving piece 821 to drive the Y-direction slide block to move relative to the Y-direction guide rail in the Y direction of the current battery cell 5, thereby driving the Y-direction press-fitting piece 822 to move in the Y direction of the current battery cell 5. Certainly, the Y-direction press-fitting component further includes a Y-direction slide block, and a Y-direction guide rail is provided on the Y-direction press-fitting piece 822. The Y-direction guide rail extends in the Y direction moving toward the current battery cell 5. The Y-direction slide block is connected to the Y-direction driving piece 821 to drive the Y-direction slide block to move relative to the Y-direction guide rail in the Y direction of the current battery cell 5, thereby driving the Y-direction press-fitting piece 822 to move in the Y direction of the current battery cell 5. Here, it should be noted that the Y-direction moving component 823 can also be other forms, and the embodiments of the present disclosure are not limited thereto.

In the embodiments of the present disclosure, the Y-direction press-fitting piece 822 can be fully attached or partially attached to the largest side of the current battery cell 5. The Y-direction press-fitting piece 822 can be a regular structure such as square, rectangle, triangle, or an irregular structure. Here, it should be supplemented that the embodiments of the present disclosure do not limit the specific structure of the Y-direction press-fitting piece 822.

It can be learned from the above embodiments that the Y direction of the current battery cell 5 is a direction in which two largest sides of the current battery cell 5 are arranged opposite. The X direction of the current battery cell 5 is a direction in which two side walls of the current battery cell 5 that are not provided with a top cover are arranged opposite. The Z direction of the current battery cell 5 is a direction in which a side wall provided with the top cover of the current battery cell 5 faces towards the opposite side wall.

Specifically, referring to FIG. 5, FIG. 6, FIG. 8, and FIG. 9, in order to press-fit both side walls of the current battery cell 5 not provided with a top cover, the press-fitting mechanism 8 includes two X-direction press-fitting assemblies 81. One X-direction press-fitting assembly 81 is provided on a side of a side wall not provided with a top cover of the current battery cell 5, and the other X-direction press-fitting assembly 81 is provided on a side of the other side wall not provided with a top cover of the current battery cell 5. Thus, both side walls not provided with a top cover of the current battery cell 5 can be press-fitted. Here, it should also be noted that the positions where the two X-direction press-fitting assemblies 81 respectively perform press-fitting on the two opposite side walls not provided with a top cover of the current battery cell 5 can be completely the same, partially the same, or completely different, and the embodiments of the present disclosure do not pose limitations.

One of the X-direction press-fitting assemblies 81 is used as an example. The X-direction press-fitting assembly 81 includes a first X-direction press-fitting piece 813, a second X-direction press-fitting piece 814, and an X-direction driving piece. The X-direction driving piece is connected to both the first X-direction press-fitting piece 813 and the second X-direction press-fitting piece 814 to drive the first X-direction press-fitting piece 813 and/or the second X-direction press-fitting piece 814 to approach or move away from each other in the X direction of the current battery cell 5, thereby providing pressure in the X direction of the current battery cell 5.

Certainly, the X-direction press-fitting assembly 81 includes a first X-direction press-fitting piece 813, a second X-direction press-fitting piece 814, a first X-direction driving piece 811, and a second X-direction driving piece 812. The first X-direction driving piece 811 is connected to the first X-direction press-fitting piece 813, and the second X-direction driving piece 812 is connected to the second X-direction press-fitting piece 814, so as to drive the first X-direction press-fitting piece 813 and the second X-direction press-fitting piece 814 to approach or move away from each other in the X direction of the current battery cell 5, thereby providing pressure in the X direction of the current battery cell 5. In an achievable implementation provided by the embodiments of the present disclosure, the X-direction press-fitting assembly 81 is provided with two X-direction driving pieces.

In the embodiments of the present disclosure, the first X-direction driving piece 811 is connected to the first X-direction press-fitting piece 813, and the second X-direction driving piece 812 is connected to the second X-direction press-fitting piece 814, so as to drive the first X-direction press-fitting piece 813 and the second X-direction press-fitting piece 814 to approach or move away from each other in the X direction of the current battery cell 5, thereby providing pressure in the X direction of the current battery cell 5. The first X-direction driving piece 811 may be a driving motor, and the second X-direction driving piece 812 may be a driving motor. Here, the first X-direction driving piece 811 may be a hydraulic pump, and the second X-direction driving piece 812 may be a hydraulic pump. The first X-direction driving piece 811 may be a driving motor, and the second X-direction driving piece 812 may be a hydraulic pump. It should be supplemented that the embodiments of the present disclosure do not limit the specific forms of the first X-direction driving piece 811 and the second X-direction driving piece 812.

On this basis, the first X-direction press-fitting piece 813 and the second X-direction press-fitting piece 814 approach or move away from each other in the X direction of the current battery cell 5, thereby providing pressure in the X direction of the current battery cell 5. However, when the first X-direction press-fitting piece 813 and the second X-direction press-fitting piece 814 approach or move away from each other in the X direction of the current battery cell 5 but cannot press-fit the two side walls not provided with a top cover, in other words, the first X-direction press-fitting piece 813 and the second X-direction press-fitting piece 814 need to move in the Y direction of the current battery cell 5, in an achievable implementation provided by the embodiments of the present disclosure, the Y-direction driving piece 821 can also be connected to both the first X-direction press-fitting piece 813 and the second X-direction press-fitting piece 814 so as to drive the first X-direction press-fitting piece 813 and the second X-direction press-fitting piece 814 to move in the Y direction of the current battery cell 5, so as to accurately press-fit the two side walls not provided with a top cover of the current battery cell 5.

In the embodiments of the present disclosure, the X-direction press-fitting assembly 81 further includes an X-direction moving component 815. In an achievable implementation provided by the embodiments of the present disclosure, the X-direction moving component 815 further includes an X-direction guide rail, and the X-direction guide rail extends in the X direction moving toward the current battery cell 5. A first X-direction slide block is provided on the first X-direction press-fitting piece 813, and a second X-direction slide block is provided on the second X-direction press-fitting piece 814. The first X-direction slide block is connected to the first X-direction driving piece 811, and the second X-direction slide block is connected to the second X-direction driving piece 812. The first X-direction press-fitting piece 813 and the second X-direction press-fitting piece 814 approach or move away from each other in the X direction of the current battery cell 5, thereby providing pressure in the X direction of the current battery cell 5. Here, it should be noted that the X-direction moving component 815 can also be other forms, and the embodiments of the present disclosure do not pose limitations.

In the embodiments of the present disclosure, the first X-direction press-fitting piece 813 and the second X-direction press-fitting piece 814 can be fully attached or partially attached to two opposite side walls not provided with a top cover of the current battery cell 5. The first X-direction press-fitting piece 813 and the second X-direction press-fitting piece 814 can be a regular structure such as square, rectangle, or triangle, or an irregular structure. Here, it should be supplemented that the embodiments of the present disclosure do not limit the specific structures of the first X-direction press-fitting piece 813 and the second X-direction press-fitting piece 814.

It can be learned from the above embodiments that the Y direction of the current battery cell 5 is a direction in which two largest sides of the current battery cell 5 are arranged opposite. The X direction of the current battery cell 5 is a direction in which two side walls of the current battery cell 5 that are not provided with a top cover are arranged opposite. The Z direction of the current battery cell 5 is a direction in which a side wall provided with the top cover of the current battery cell 5 faces towards the opposite side wall.

Specifically, referring to FIG. 5, FIG. 6, and FIG. 7, in order to press-fit the side wall provided with the top cover of the current battery cell 5, the press-fitting mechanism 8 includes one Z-direction press-fitting assembly 83. The Z-direction press-fitting assembly 83 includes a Z-direction press-fitting piece 832 and a Z-direction driving piece 831. The Z-direction driving piece 831 is connected to the Z-direction press-fitting piece 832, and the Z-direction driving piece 831 provides power and pressure for the Z-direction press-fitting piece 832 to move in the Z direction of the current battery cell 5.

In the embodiments of the present disclosure, the Z-direction driving piece 831 provides power and pressure for the Z-direction press-fitting piece 832 to move in the Z direction of the current battery cell 5. Here, the Z-direction driving piece 831 may be a driving motor, and the driving motor directly provides power and pressure for the Z-direction press-fitting piece 832 to move in the Z direction of the current battery cell 5. Here, the Z-direction driving piece 831 may be a hydraulic pump, and the hydraulic pump directly provides power and pressure for the Z-direction press-fitting piece 832 to move in the Z direction of the current battery cell 5. It should be supplemented that the embodiments of the present disclosure do not limit the specific form of the Z-direction driving piece 831.

In the embodiments of the present disclosure, the Z-direction driving piece 831 provides power and pressure for the Z-direction press-fitting piece 832 to move in the Z direction of the current battery cell 5. In order to make the movement of the Z-direction press-fitting piece 832 in the Z direction of the current battery cell 5 more stable, the Z-direction press-fitting assembly 83 further includes a Z-direction moving component 833. In an achievable implementation provided by the embodiments of the present disclosure, the Z-direction press-fitting component further includes a Z-direction guide rail, and the Z-direction guide rail extends in the Z direction moving toward the current battery cell 5. A Z-direction slide block is provided on the Z-direction press-fitting piece 832. The Z-direction slide block is connected to the Z-direction driving piece 831 to drive the Z-direction slide block to move relative to the Z-direction guide rail in the Z direction of the current battery cell 5, thereby driving the Z-direction press-fitting piece 832 to move in the Z direction of the current battery cell 5. Certainly, the Z-direction press-fitting component further includes a Z-direction slide block, and a Z-direction guide rail is provided on the Z-direction press-fitting piece 832. The Z-direction guide rail extends in the Z direction moving toward the current battery cell 5. The Z-direction slide block is connected to the Z-direction driving piece 831 to drive the Z-direction slide block to move relative to the Z-direction guide rail in the Z direction of the current battery cell 5, thereby driving the Z-direction press-fitting piece 832 to move in the Z direction of the current battery cell 5. Here, it should be noted that the Z-direction moving component 833 can also be other forms, and the embodiments of the present disclosure do not pose limitations.

In the embodiments of the present disclosure, the Z-direction press-fitting piece 832 can be fully attached or partially attached to the side wall provided with the top cover of the current battery cell 5. The Z-direction press-fitting piece 832 can be a regular structure such as square, rectangle, or triangle, or an irregular structure. Here, it should be supplemented that the embodiments of the present disclosure do not limit the specific structure of the Z-direction press-fitting piece 832. In an achievable implementation provided by the embodiments of the present disclosure, an avoidance groove is provided on the Z-direction press-fitting piece 832 to avoid components on the side wall provided with the top cover of the current battery cell 5.

The computer-readable storage medium may be a ferromagnetic random access memory (ferromagnetic random access memory, FRAM), a read only memory (Read Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electrically Erasable Programmable Read-Only Memory, EEPROM), a flash memory (Flash Memory), a magnetic surface memory, an optical disk, or a compact disc read-only memory (Compact Disc Read-Only Memory, CD-ROM) and other memories.

Those skilled in the art should understand that the embodiments of the present disclosure may be provided as a method, a system, or a computer program product. Therefore, the present disclosure may adopt the form of a hardware embodiment, a software embodiment, or an embodiment combining software and hardware. Moreover, the present disclosure may adopt the form of a computer program product implemented on one or more computer-usable storage media (including but not limited to a disk storage, an optical storage, or the like.) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, and combinations of processes and/or blocks in the flowcharts and/or block diagrams can be implemented by computer program instructions. These computer program instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes of the flowchart and/or one block or multiple blocks of the block diagram.

These computer program instructions can also be stored in a computer-readable memory that can direct a computer or other programmable data processing device to work in a specific manner, so that the instructions stored in the computer-readable memory produce a manufactured article including an instruction device, and the instruction device implements the functions specified in one process or multiple processes of the flowchart and/or one block or multiple blocks of the block diagram.

These computer program instructions can also be loaded onto a computer or other programmable data processing device, so that a series of operational steps are performed on the computer or other programmable device to produce computer-implemented processing, thereby the instructions executed on the computer or other programmable device provide steps for implementing the functions specified in one process or multiple processes of the flowchart and/or one block or multiple blocks of the block diagram.

The above are only preferred embodiments of the present disclosure and are not intended to limit the protection scope of the present disclosure.

## Claims

1. A battery top cover welding system, comprising: a programmable logic controller and a press-fitting device, wherein the programmable logic controller is configured to:
when battery cell press-fitting is to be performed on a current battery cell, and a size of the current battery cell is different from a size of a previous battery cell, control the press-fitting device to make the current battery cell move to a pre-press-fitting position;
control a press-fitting mechanism of the press-fitting device to move, so as to press-fit the current battery cell at the pre-press-fitting position;
when a pressure value exerted on the current battery cell reaches a preset value to cause the press-fitting mechanism to stop moving, acquire a movement displacement of the press-fitting mechanism; and
calculate a change value between the movement displacement of the press-fitting mechanism and a preset movement displacement; wherein the change value is used for displacement compensation in battery cell press-fitting and subsequent processes after battery cell press-fitting in top cover welding, and the processes after battery cell press-fitting comprise: gap detection, battery cell pre-welding, battery cell full welding, battery cell rolling, and post-rolling detection.

2. The system according to claim 1, wherein the programmable logic controller is further configured to:
acquire a batch number of the current battery cell; and
when the batch number of the current battery cell is different from a batch number of the previous battery cell, determine that the size of the current battery cell is different from the size of the previous battery cell.

3. The system according to claim 1 or 2, wherein the programmable logic controller is further configured to:
when the batch number of the current battery cell is the same as the batch number of the previous battery cell, determine that the size of the current battery cell is the same as the size of the previous battery cell.

4. The system according to claim 2 or 3, wherein the battery top cover welding system further comprises: a loading device; and the programmable logic controller is specifically configured to:
acquire a two-dimensional code of the current battery cell from the loading device; and
determine the batch number of the current battery cell according to the two-dimensional code of the current battery cell.

5. The system according to any one of claims 1 to 4, wherein the press-fitting device comprises: a fixing mechanism; and the programmable logic controller is specifically configured to:
when battery cell press-fitting is to be performed on the current battery cell and it is determined that the size of the current battery cell is different from the size of the previous battery cell, control the fixing mechanism to fix the current battery cell and then move the current battery cell to the pre-press-fitting position.

6. The system according to claim 5, wherein the press-fitting mechanism comprises: an X-direction press-fitting assembly, a Y-direction press-fitting assembly, and a Z-direction press-fitting assembly; and the programmable logic controller is specifically configured to:
separately control the X-direction press-fitting assembly, the Y-direction press-fitting assembly, and the Z-direction press-fitting assembly to move, so as to make the X-direction press-fitting assembly, the Y-direction press-fitting assembly, and the Z-direction press-fitting assembly press-fit the current battery cell at the pre-press-fitting position.

7. The system according to claim 6, wherein the X-direction press-fitting piece comprises: a first X-direction press-fitting piece and a second X-direction press-fitting piece, and the programmable logic controller is specifically configured to:
separately control the first X-direction press-fitting assembly, the second X-direction press-fitting assembly, the Y-direction press-fitting assembly, and the Z-direction press-fitting assembly to move, so as to make the first X-direction press-fitting assembly, the second X-direction press-fitting assembly, the Y-direction press-fitting assembly, and the Z-direction press-fitting assembly press-fit the current battery cell at the pre-press-fitting position.

8. The system according to claim 6 or 7, wherein the programmable logic controller is specifically configured to:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquire a movement displacement of the X-direction press-fitting assembly, a movement displacement of the Y-direction press-fitting assembly, and a movement displacement of the Z-direction press-fitting assembly.

9. The system according to any one of claims 1 to 8, wherein a pressure module is further provided on the press-fitting mechanism, and the pressure module is configured to:
collect a pressure value applied by the press-fitting mechanism to the current battery cell; and
when the pressure value reaches the preset value, send a control signal to a servo probe of the press-fitting device; wherein
the servo probe of the press-fitting device is configured to control the press-fitting mechanism to stop moving according to the control signal.

10. The system according to claim 8, wherein the preset movement displacement comprises: an X-direction preset displacement, a Y-direction preset displacement, and a Z-direction preset displacement; and the programmable logic controller is specifically configured to:
calculate the X-direction difference between the movement displacement of the X-direction press-fitting assembly and the X-direction preset displacement;
calculate the Y-direction difference between the movement displacement of the Y-direction press-fitting assembly and the Y-direction preset displacement;
calculate the Z-direction difference between the movement displacement of the Z-direction press-fitting assembly and the Z-direction preset displacement; and
determine the X-direction difference, the Y-direction difference, and the Z-direction difference as the change value between the movement displacement of the press-fitting mechanism and the preset movement displacement.

11. A battery top cover welding method applied to a battery top cover welding system, wherein the battery top cover welding system comprises: a programmable logic controller and a press-fitting device, and the method comprises:
when battery cell press-fitting is to be performed on a current battery cell, and a size of the current battery cell is different from a size of a previous battery cell, controlling, by the programmable logic controller, the press-fitting device to make the current battery cell move to a pre-press-fitting position;
controlling, by the programmable logic controller, a press-fitting mechanism of the press-fitting device to move, so as to press-fit the current battery cell at the pre-press-fitting position;
when a pressure value exerted on the current battery cell reaches a preset value to cause the press-fitting mechanism to stop moving, acquiring, by the programmable logic controller, a movement displacement of the press-fitting mechanism; and
calculating, by the programmable logic controller, a change value between the movement displacement of the press-fitting mechanism and a preset movement displacement; wherein the change value is used for displacement compensation in battery cell press-fitting and subsequent processes after battery cell press-fitting in top cover welding; and the processes after battery cell press-fitting comprise: gap detection, battery cell pre-welding, battery cell full welding, battery cell rolling, and post-rolling detection.

12. The method according to claim 11, wherein the method further comprises:
acquiring, by the programmable logic controller, a batch number of the current battery cell; and
when the batch number of the current battery cell is different from a batch number of the previous battery cell, determining, by the programmable logic controller, that the size of the current battery cell is different from the size of the previous battery cell.

13. The method according to claim 11 or 12, wherein the method further comprises:
when the batch number of the current battery cell is the same as the batch number of the previous battery cell, determining, by the programmable logic controller, that the size of the current battery cell is the same as the size of the previous battery cell.

14. The method according to claim 12 or 13, wherein the battery top cover welding system further comprises: a loading device; and the acquiring, by the programmable logic controller, a batch number of the current battery cell comprises:
acquiring, by the programmable logic controller, a two-dimensional code of the current battery cell from the loading device; and
determining, by the programmable logic controller, the batch number of the current battery cell according to the two-dimensional code of the current battery cell.

15. The method according to any one of claims 11 to 14, wherein the press-fitting device comprises: a fixing mechanism; and the when battery cell press-fitting is to be performed on a current battery cell, and a size of the current battery cell is different from a size of a previous battery cell, controlling, by the programmable logic controller, the press-fitting device to make the current battery cell move to a pre-press-fitting position comprises:
when battery cell press-fitting is to be performed on the current battery cell, and the programmable logic controller determines that the size of the current battery cell is different from the size of the previous battery cell, controlling the fixing mechanism to fix the current battery cell and then move the current battery cell to the pre-press-fitting position.

16. The method according to claim 15, wherein the press-fitting mechanism comprises: an X-direction press-fitting assembly, a Y-direction press-fitting assembly, and a Z-direction press-fitting assembly; and the controlling, by the programmable logic controller, a press-fitting mechanism of the press-fitting device to move, so as to press-fit the current battery cell at the pre-press-fitting position comprises:
separately controlling, by the programmable logic controller, the X-direction press-fitting assembly, the Y-direction press-fitting assembly, and the Z-direction press-fitting assembly to move, so as to make the X-direction press-fitting assembly, the Y-direction press-fitting assembly, and the Z-direction press-fitting assembly press-fit the current battery cell at the pre-press-fitting position.

17. The method according to claim 16, wherein the X-direction press-fitting piece comprises: a first X-direction press-fitting piece and a second X-direction press-fitting piece, and the controlling, by the programmable logic controller, a press-fitting mechanism of the press-fitting device to move, so as to press-fit the current battery cell at the pre-press-fitting position comprises:
separately controlling the first X-direction press-fitting assembly, the second X-direction press-fitting assembly, the Y-direction press-fitting assembly, and the Z-direction press-fitting assembly to move, so as to make the first X-direction press-fitting assembly, the second X-direction press-fitting assembly, the Y-direction press-fitting assembly, and the Z-direction press-fitting assembly press-fit the current battery cell at the pre-press-fitting position.

18. The method according to claim 16 or 17, wherein the when a pressure value exerted on the current battery cell reaches a preset value to cause the press-fitting mechanism to stop moving, acquiring, by the programmable logic controller, a movement displacement of the press-fitting mechanism comprises:
when a pressure value exerted on the current battery cell by the X-direction press-fitting assembly reaches a preset first pressure value to cause the X-direction press-fitting assembly to stop moving, a pressure value exerted on the current battery cell by the Y-direction press-fitting assembly reaches a preset second pressure value to cause the Y-direction press-fitting assembly to stop moving, and a pressure value exerted on the current battery cell by the Z-direction press-fitting assembly reaches a preset third pressure value to cause the Z-direction press-fitting assembly to stop moving, acquiring, by the programmable logic controller, a movement displacement of the X-direction press-fitting assembly, a movement displacement of the Y-direction press-fitting assembly, and a movement displacement of the Z-direction press-fitting assembly.

19. The method according to any one of claims 11 to 18, wherein a pressure module is further provided on the press-fitting mechanism, and the method further comprises:
collecting, by the pressure module, a pressure value applied by the press-fitting mechanism to the current battery cell;
when the pressure value reaches the preset value, sending, by the pressure module, a control signal to a servo probe of the press-fitting device; and
controlling, by the servo probe of the press-fitting device, the press-fitting mechanism to stop moving according to the control signal.

20. The method according to claim 18, wherein the preset movement displacement comprises: an X-direction preset displacement, a Y-direction preset displacement, and a Z-direction preset displacement; and the calculating, by the programmable logic controller, a change value between the movement displacement of the press-fitting mechanism and a preset movement displacement comprises:
calculating, by the programmable logic controller, the X-direction difference between the movement displacement of the X-direction press-fitting assembly and the X-direction preset displacement;
calculating, by the programmable logic controller, the Y-direction difference between the movement displacement of the Y-direction press-fitting assembly and the Y-direction preset displacement;
calculating, by the programmable logic controller, the Z-direction difference between the movement displacement of the Z-direction press-fitting assembly and the Z-direction preset displacement; and
determining, by the programmable logic controller, the X-direction difference, the Y-direction difference, and the Z-direction difference as the change value between the movement displacement of the press-fitting mechanism and the preset movement displacement.
